# EUROPÄISCHE PATENTANMELDUNG

(11) **EP 0 934 837 A2**
(43) Veröffentlichungstag der Anmeldung: **11.08.1999**
(21) Anmeldenummer: 99101447.3
(22) Anmeldetag: 27.01.1999
(51) Int. Cl.: B60C 15/00, B60C 9/04, B60C 15/05

(54) **Fahrzeugluftreifen mit geteilter Karkasse**

(30) Priorität: 04.02.1998 DE 19804295
(71) Anmelder: Continental Aktiengesellschaft, 30165 Hannover (DE)
(72) Erfinder: Frerichs, Udo, 30588 Langenhagen (DE)

(57) **Zusammenfassung**

Fahrzeugluftreifen, der im wesentlichen aus einem Laufstreifen, Seitenwänden, ein oder mehreren Gürtellagen als Verstärkungselementen, aus mit Wulstkernen versehenen Reitenwülsten sowie aus einer Karkasse mit gewebeverstärkten Karkassenlagen besteht, wobei die Karkassenlagen in bezug auf den Reifenquerschnitt jeweils zweiteilig und so ausgebildet sind, daß der jeweils eine Teil einer Karkassenlage sich im wesentlichen über eine Reifenhälfte von dem mit Wulstkernen versehenen Reifenwulst über die Seitenwand bis in bzw. unter den Bereich der Gürtellagen erstreckt und an dem zugehörigen Wulstkern über eine kraftschlüssige Verbindung befestigt ist.

## Beschreibung

Die Erfindung betrifft einen Fahrzeugluftreifen, der im wesentlichen aus einem Laufstreifen, Seitenwänden, ein oder mehreren Gürtellagen als Verstärkungselementen, aus mit Wulstkemen versehenen Reifenwülsten sowie aus einer Karkasse mit gewebeverstärkten Karkassenlagen besteht, wobei die Karkassenlagen in bezug auf den Reifenquerschnitt jeweils zweiteilig und im wesentlichen eine Reifenhälfte überdeckend ausgebildet sind.

Geteilte Kakassen bzw. geteilte Verstärkungslagen innerhalb einer Karkasse, die im Hinblick auf einen Querschnitt senkrecht zur Zenitebene aus zwei oder mehr Teilen bestehen, welche wiederum für sich nur einen Teilbereich des Querschnitts überdecken, sind bei der Diagonalreifenherstellung bekannt oder auch bei den im Hinblick auf die Diagonalreifenherstellung und Radialreifenherstellung entstandenen Mischformen.

Eine solche Mischform zeigt beispielsweise die DE-PS 1 480 952, bei der die geteilten Verstärkungslagen der Karkasse in den Seitenwandbereichen radial und im Laufstreifenbereich bzw. unterhalb des Laufstreifens diagonal ausgebildet sind. Hierbei beinhaltet die Karkasse eine doppelte, nämlich eine innere und eine äußere Verstärkungslage, die dadurch entsteht, daß die äußere Karkassfädenlage um die Wulstkerne geschlagen und auf der Karkasseninnenseite bis etwa in den Schulterbereich bzw. den Randbereich des Laufstreifens zurückgeführt wird. Die karkassenäußere Verstärkungslage überdeckt jeweils den gesamten Laufstreifenbereich, endet im gegenüberliegenden Randbereich des Laufstreifens und weist im Laufstreifenbereich diagonal gerichtete Verstärkungslemente (Karkassfäden) auf. Die Seitenwandbereiche dieser wie auch der inneren Verstärkungslage sind jedoch mit radial verlaufenden Verstärkungselementen versehen. Die untere Karkasslage ist hier unterhalb des Laufstreifens geteilt.

Der Grund hierfür liegt darin, daß speziell bei den bis in die 70er Jahre hergestellten Reifen ohne Gürtellagenpaket die bei der Bombage eintretende Breitenverminderung der Laufstreifenzone des Reifenrohlings zu einer Stauchverformung der unterhalb des Laufstreifens liegenden Karkassenfäden führen kann, da bei der Aufweitung des Laufstreifenbereiches eine Tendenz zur Kontraktion desselben in axialer Richtung besteht.

Solche Druckspannungen im Karkassgewebe unterhalb des Laufstreifens, die durch die Belastung des Reifens bei verschiedenen Fahrzuständen und insbesondere beim Überfahren von Hindemissen noch verstärkt werden, konnten zu gravierenden Schädigungen von radial gelagerten Karkassverstärkungen, sogar zur Stauchung bis zum Bruch, führen. Auch diagonale Verstärkungslagen werden durch Druckspannungen beeinflußt, wobei jedoch hier durch das entstehende Kräfteparallelogramm eher eine Verschiebung der Verstärkungselemente bzw. eine Verformung des Karkassgitters die Folge ist. Da diese Ausweichmöglichkeit bei radialen Verstärkungslagen nicht besteht, ist mit der Teilung der karkasseninneren Verstärkungslagen eine Möglichkeit gefunden worden, die Bruchgefahr zu vermeiden.

Ebenfalls ist es z.B. durch die GB 905 470 bekannt, Diagonalkarkassen auch bei Verwendung eines zusätzlichen Gürtels mit üblicherweise diagonalen Verstärkungsfäden in dessen unmittelbarer Nachbarschaft als Karkassen mit geteilter Gewebelage aufzubauen. Der Grund hierfür liegt neben dem auch hier gewünschten Vermeiden von Stauchungen darin, daß die durch die Strukturen begründete unterschiedliche Nachgiebigkeiten und Verformungsfähigkeiten von Gürtel- und Karkasslagen sich im Betriebszustand, d.h. beim Abrollen nicht gegenseitig behindern oder aufheben.

Die heute übliche Fertigung von Gürtelreifen mit einer Radialkarkasse und die üblicherweise verwendeten modernen Karkassverstärkungsmaterialien, wie Polyamid/Aramid, Polyester, Rayon oder Nylon mit ihrer stark ausgeprägten Dehnungsfähigkert haben die eingangs genannten Probleme durch ihre besonderen Materialeigenschaften im wesentlichen gelöst, so daß die geteilte Karkasse bei modemen Fertigungsmethoden keine Rolle mehr spielt und nicht mehr genutzt wird, zumal die heute übliche Karkasse mit einteiligen Verstärkungslagen die Teilevielfalt reduziert.

Es ergibt sich jedoch andererseits bei den hoch dehnungsfähigen Materialien heutiger Fertigung und bei der zugehörigen starken Bombierung und der ausgeprägten Einbringung von Zugspannungen gerade bei einteiligen Verstärkungslagen innerhalb der Karkassen die Notwendigkeit einer besonderen Vorsorge im Hinblick auf die Verbindung der Karkassen mit den Wulstkernen.

Diese Verbindung erfolgt üblicherweise durch den sogenannten Lagenumschlag, d.h. durch eine formschlüssige Verbindung, bei der die Karkassenlagen um die Wulstkerne herumgeschlagen und über eine gewisse Distanz an der Seitenwand wieder hochgeführt werden, wobei in aller Regel zwischen einlaufender und auslaufender Karkassenlage ein Kernreiter, d.h. ein im Querschnitt tropfenförmiges oder dreieckiges Gummiprofil, eingesetzt wird. Man vermeidet so zum einen Lufteinschlüsse und zum anderen abrupte Übergänge und Spannungsspitzen, so daß in diesem Bereich eine Festigkeit gegen Bewegungen bzw. Walken des Reifens bereitgestellt wird.

Da dieser Lagenumschlag (turn-up) in Bereichen der Seitenwand endet, die im besonderen Maße einer Walkung in Axialrichtung ausgesetzt sind, ist es wichtig, daß das zurückgeschlagene Karkassenlagenende mit seinem End- oder Stoßbereich nicht in die Zone größter Walkung gelegt wird, damit Reibungen und Ablöseerscheinungen verhindert werden. Dies ist wiederum eine Frage der Einhaltung der Fertigungstoleranzen, die ausgehend von der ursprünglichen Karkasslagenbreite durch die Bombierung, die Materialstreckung und durch das eventuelle Ausziehen aus der Verbindung stark beeinflußt werden. Ein Gegensteuem ist in aller Regel bei dem durch mechanische, thermische und chemische Parameter bestimmten komplexen Reifenherstellungsverfahren nur durch empirische Ermittlungen und Versuche möglich.

Die formschlüssige Verankerung der Karkassenlagen am Kern erfordert durch einen. ausgeprägten und lediglich für die Fertigung nötigen Lagenumschlag auch einen Mehreinsatz an Material, der den eigentlich später vorhandenen oder geforderten Produkteigenschaften nichts hinzufügt.

Für die Erfindung bestand daher die Aufgabe, die Reifenfertigung im Hinblick auf die Einhaltung der Toleranz beim Lagenumschlag sicherer zu gestalten, eine Möglichkeit zur Einsparung von Verstärungsmaterial bzw. Karkassenlagenmaterial vorzusehen, einen Auszug der Karkassenlagen aus der Verbindung mit dem Wulstkern bei der Bombierung zu vermeiden und letztlich ein Fertigungsverfahren bereitzustellen, das in wirtschaftlicher Weise und variabel für die Herstellung aller Reifentypen einsetzbar ist.

Gelöst wird die Aufgabe durch die Merkmale des Hauptanspruchs, wobei die Karkassenlagen in bezug auf den Reifenquerschnitt jeweils zweiteilig und so ausgebildet sind, daß der jeweils eine Teil einer Karkassenlage sich im wesentlichen über eine Reifenhälfte von dem mit Wulstkernen versehenen Reifenwulst über die Seitenwand bis in bzw. unter den Bereich der Gürtellagen erstreckt und an den zugehörigen Wulstkernen über eine kraftschlüssige Verbindung befestigt ist.

Durch die Nutzung der an sich bekannten Teilung von Verstärkungs- bzw. Gewebematerialien bei den heute verwendeten Radialkarkassen mit hochdehnfähigen Materialien für Gürtelreifen sowie durch deren Kombination mit der ebenfalls bekannten kraftschlüssigen Verbindung der Gürtellagen mit dem Wulstkern ergibt sich die Möglichkeit, auf die üblicherweise erforderliche hochgenaue und auf unterschiedliche Materialelastizitäten angepaßte Voreinstellung der Breite der Karkassverstärkungslagen zu verzichten. Auch läßt sich hierdurch ein Ausziehen aus der Verbindung zwischen Karkassenlage und Wulstkern sicher verhindern. Ebenfalls werden Toleranzen in einem etwa vorhandenen Lagenumschlag einhaltbar, die wesentlich unter dem bisher Erreichbaren liegen.

Die Anwendung einer geteilten Karkasse in Verbindung mit einem Gürtelreifen ist zudem im Hinblick auf die Produkteigenschaften völlig unkritisch, da die im Laufflächenbereich liegende Teilung der Karkassverstärkungslagen durch das darüber befindliche Gürtellagenpaket abgedeckt wird, welches durch die darin wiederum vorhandenen Gürtelverstärkungslagen die Karkassverstärkungen völlig ersetzt.

Mit einer geteilten Karkasse ist dann eine starke Bombierung ohne Probleme und insbesondere ohne Ausziehen aus der Verbindung zwischen Karkassenlagen und Wulstkernen möglich. Die Verbindung selbst kann dadurch lediglich kraftschlüssig erfolgen, was für die Fertigung hinreichend und für die Produkteigenschaften ohne Auswirkung ist.

Zusätzlich zu der kraftschlüssigen Verbindung kann natürlich auch noch eine formschlüssige Verbindung in Form eines Lagenumschlags - etwa zur Verstärkung der unteren Seitenwandbereiche - vorgesehen werden. Durch die darüber hinaus bestehende Möglichkeit einer definierten Anlage der geteilten Karkassenlagen als Einzelelemente bei der Herstellung bzw. beim Aufbau auf der Trommel ist auch die Toleranz des Lagenumschlages hochgenau einstellbar und verliert gänzlich ihre Bedeutung als Problem für das Walken des Reifens. Eine Einstellung der Toleranz kann hier am Mindestmaß (Low Ply Turn-up) erfolgen, so daß zusätzlich eine Materialersparnis erreichbar wird.

Vorteilhafterweise sind die korrespondierenden Karkassenlagen beider Reifenhälften im Bereich der Gürtellagen voneinander beabstandet angeordnet. Neben der hierdurch ebenfalls möglichen Materialersparnis, die eventuell noch größer ist als die im Lagenumschlagsbereich, läßt sich die Karkassenlagenkonstruktion so ausbilden, daß ein zur Kraftübertragung optimaler Übergang zwischen Gürtellagenpaket und Karkassenlagen im Gürtellagenrandbereich ausgestaltet wird, der Unstetigkeiten und Sprünge in der Krafteinleitung sicher vermeidet.

In einer weiteren vorteilhaften Ausführung wird der durch den Abstand zweier korrespondierender Karkassenlagen beider Reifenhälften im Bereich der Gürtellagen entstehende Zwischenraum durch einen Materialstreifen entsprechender Breite ausgefüllt. Ein solcher Materialstreifen, der in der Regel aus Gummi, ggf. auch aus mit Verstärkungslagen versehenen Gummistreifen bestehen kann, sorgt für eine glatte Anlage der Innenseele und verhindert eine Penetration der Innenseele durch gewebeverstärkende Teile der Karkassenlage.

In einer vorteilhaften Ausbildung ist der Materialstreifen bereits so ausgebildet, daß er auf seiner Innenseite zumindest mit einem mittleren Teil der Innenseele des Reifens verbunden ist. Dadurch lassen sich auf einfache Weise sichere Verbindungen durch Überlappungen von Innenseelenteilen herstellen, wodurch eine auf der gesamten Reifeninnenseite sichere Auflage und Anlage der Holobutyl-Innenseele erreicht wird.

Durch die Wahl der Breite des Materialstreifens läßt sich auch bei in ihrer Geometrie unveränderten Karkasslagen die Reifenabmessung insgesamt, d.h. das Höhen-BreitenVerhältnis verändern, so daß durch Zwischenlage mehr oder weniger breiter Streifen, Breitreifen und Reifen normaler Abmessung gleichermaßen erzeugt werden können, was im Hinblick auf die Reduktion der Teilevielfalt und auf die für die Einzelbauteile vorzusehenen Vorfertigungsverfahren eine hohe Flexibilität erlaubt.

Vorteilhafterweise erfolgt die kraftschlüssige Verbindung mit den Wulstkemen durch eine Klemmung zwischen Karkassenlagen und Kemdrähten. Durch eine solche an sich bekannte Klemmung zwischen Drähten oder Drahtpaketen des Wulstkernes ergibt sich eine Verbindung, die für die Eigenschaften des fertigen Reifenproduktes völlig ausreichend ist und nicht für lediglich einige Fertigungsschritte überdimensioniert werden muß.

Für die Klemmung zwischen Kerndrähten ergeben sich die unterschiedlichsten Möglichkeiten, z.B. mittels 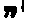 Pierce-Kernen", die in den Ausführungsbeispielen näher angegeben sind. Die Klemmung selbst kann mit einem genau definierten Lagenumschlag im Hinblick auf die bereits genannte Verstärkung von Seitenwandteilen ausgeführt werden oder auch - etwa um weiteres Gewebematerial zu sparen - ohne Lagenumschlag erfolgen.

Je nach Ausführung und gewünschter Steifigkeit der unteren Seitenteile im Hinblick auf die Walkung in Radial- bzw. in Axialrichtung können Kernreiter oder Verstärkungsmaterialien in diesen Bereichen eingebracht werden, die lediglich für ihren eigentlichen Zweck konstruiert werden können und deren Abmessungen nicht, auch noch zusätzlich auf die Lagenumschläge bzw. auf die Lagenumschlagstoleranz hin ausgelegt werden müssen.

Bei Verwendung eines Lagenumschlages ist es vorteilhaft, daß der Lagenumschlag bis auf eine Umschlagshöhe von maximal 20 mm, vorzugsweise bis auf eine Umschlagshöhe von ≤ 12 mm vom unteren Kernrand erfolgt. Eine solche Auslegung des Lagenumschlages vermeidet die Anordnung der Stoßkante der Karkassverstärkungen in der sogenannten 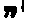 Tabuzone" zwischen 20 und 40 mm vom unteren Kernrand, die besonders einer Walkbeanspruchung unterworfen ist und darum von Unstetigkeiten freigehalten werden muß. Dies war mit dem bisherigen Fertigungsverfahren nicht möglich und führte dazu, daß der Lagenumschlag mit einem entsprechenden Sicherheitszuschlag entweder zu kurz oder zu lang ausgelegt werden mußte.

In einer weiteren vorteilhaften Ausbildung erfolgt der Lagenumschlag auf eine Umschlagshöhe, deren Bereich nach unten durch einen Mindestabstand von 44 mm vom unteren Kernrand und nach oben durch den Gürtelkantenbereich begrenzt wird.

Mit einem solchen sehr hoch gezogenen Lagenumschlag lassen sich besondere Karkassentypen, etwa für verstärkte Reifenkonstruktionen (reinforced), herstellen, wobei ebenfalls das Ende des Lagenumschlages sehr genau positioniert werden kann.

In einer weiteren vorteilhaften Ausbildung ist der Lagenumschlag bis zur Anlage an die oberhalb des Kems befindliche Karkassenlage zurückgeführt und liegt parallel neben dieser Karkassenlage bis zur gewünschten Umschlaghöhe. Damit lassen sich bei der Reifenkonstruktion die einlaufende und die umgeschlagene Karkassenlage in eine Ebene legen, die im Hinblick auf die Beanspruchung der Gewebeverstärkungslagen günstig - z.B. in der neutralen Faser des Querschnitts - gelegen ist. Innerhalb solcher Ausbildungen können - ähnlich den Kernreitern - Verstärkungsprofile wie 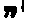 chafer" oder 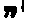 filler" auch in den, von den Karkassenlagen gesehen, äußeren Bereichen der Seitenwand angeordnet sein.

Ebenfalls wird durch die Erfindung ein Fahrzeugluftreifen bekannt gemacht, der aus vorgefertigten und ausvulkanisierten ersten Reifenbauteilen und aus auf die miteinander verbundenen ersten Reifenbauteile aufgebrachten komplettierenden Reifenbauteilen besteht, die durch Vulkanisation mit den ersten Reifenbauteilen verbunden werden, wobei die ersten Reifenbauteile jeweils aus in bezug auf den Reifenquerschnitt im wesentlichen je eine Reifenhälfte bildenden gewebeverstärkten Karkassenlagen bestehen und als sonstige Bauteile zumindest die Wulstverstärkungen und -keme, die Kernreiter, die Hornprofile und gegebenenfalls einzelne oder alle Teile der Innenseele oder der Seitenwand enthalten, und wobei die komplettierenden Reifenbauteile aus dem Gürtelverband, gegebenenfalls der zumindest einlagigen ein- oder mehrteiligen Gürtelbandage, dem Laufstreifen, und den evtl. fehlenden Teilen der Innenseele oder der Seitenwand bestehen.

Ein solcher Reifen, der unter Verwendung von aus-oder teilvulkanisierten Reifenbauteilen hergestellt wird, erlaubt eine einfache Anpassung und modulartige Zusammensetzung des Fertigungsverfahrens, so daß beliebige Reifentypen mit einer reduzierten Anzahl von Vorprodukten zu beliebigen Fertigungszeiten zusammengestellt werden können.

Anhand eines Ausführungsbeispieles soll die Erfindung näher dargestellt werden. Es zeigen
- Fig. 1: einen erfindungsgemäßen Fahrzeugluftreifen mit geteilter Karkasse im Halbschnitt,
- Fig. 2: verschiedene Verbindungsmöglichkeiten der geteilten Karkasslagen mit den zugehörigen Kernen.

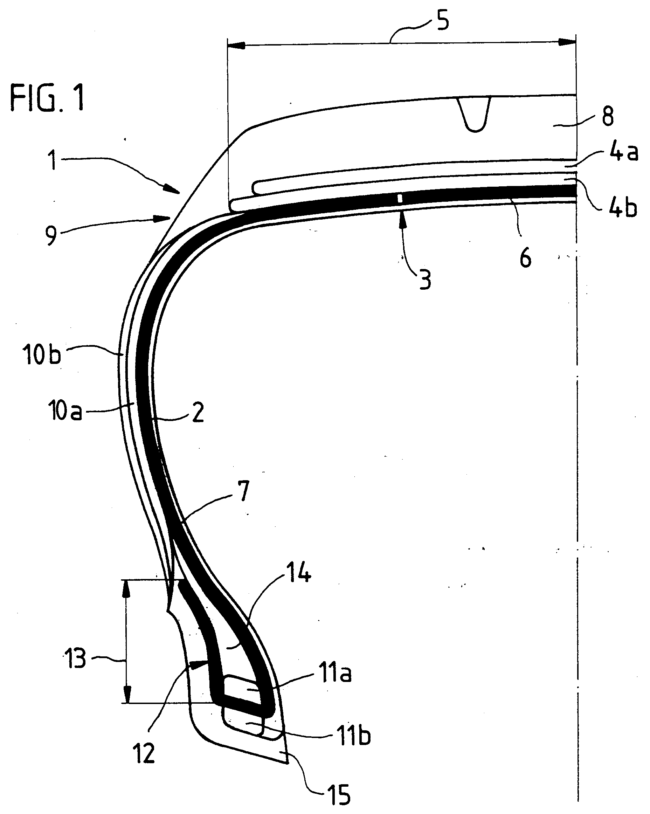

Die Fig. 1 zeigt einen erfindungsgemäßen Fahrzeugluftreifen 1 mit geteilter Karkasse in einer Ausführung mit hochgezogenem Lagenumschlag im Halbschnitt symmetrisch zur Zenitebene des Reifens. Die gewebeverstärkten Karkassenlagen 2 der Karkasse sind dabei zweiteilig ausgebildet und erstrecken sich ausgehend vom Wulstkern jeweils im wesentlichen über eine Reifenhälfte bis zur Stoßstelle 3 unterhalb des durch die Gürtellagen 4a und 4b abgedeckten Bereiches 5.

Die korrespondierenden Karkassenlagen beider Reifenhälften sind hier voneinander beabstandet angeordnet, wobei der Zwischenraum durch einen Materialstreifen 6 ausgefüllt wird, der in dieser Ausführung ebenfalls stabilisierende Gewebelagen enthält, dieser aber nicht notwendigerweise enthalten muß. Der Materialstreifen 6 dient im wesentlichen dazu, Sprünge oder Unstetigkeiten der Innenoberfläche des Reifens zu vermeiden, die an den Übergangsstellen eine besondere Beanspruchung der Innenseele 7 darstellen könnten.

Der Laufstreifen 8 überdeckt das Gürtellagenpaket und legt sich mit seinen als Schulterbereiche ausgearbeiteten Endabschnitten 9 auch noch über die Seitenwandstreifen 10a und 10b, wodurch die übliche Anpassung von Gummimischungen und Lagen in den unterschiedlichen Beanspruchungsbereichen des Reifens eingestellt wird. Der Laufstreifen besteht hier aus einer Cap- und einer Basemischung, die im wesentlichen in bezug auf ihre Härte und Festigkeit unterschiedlich und dem gewünschten Laufverhalten angepaßt und ausgebildet sind.

Die Karkasslagen 2 sind zwischen den Kernteilen 11a und 11b kraftschlüssig geklemmt und zusätzlich an der Außenseite zur Lauffläche hin umgeschlagen und bilden damit den die Seitenwand verstärkenden Lagenumschlag 12, der über die Umschlagslänge 13 an der Seitenwand hochgeführt ist. Die Umschlagslänge 13 beträgt in diesem Fall 45 mm.

Der oberhalb des Kems entstehende Zwischenraum wird durch den Kernreiter bzw. durch das Apexprofil 14 ausgefüllt, welches den Seitenwänden in diesen Bereichen eine zusätzliche Stabilität und Festigkeit vermittelt. Das Hornprofil 15 komplettiert den Reifenwulst und sorgt für eine sichere Auflage auf der Felge. Die Innenseele 7 ist im Bereich der Kernteile bzw. des Hornprofils netweder, wie hier gezeigt, mit einem verdickten Profilbereich ausgebildet oder stützt sich über separat eingelegte Gummiprofile ab.

Die in der Fig. 1 dargestellte Reifenkonstruktion zeigt deutlich, daß auch bei einer starken Bombierung des Reifens im Fertigungsprozeß die Lagenumschlagshöhe 13 nicht mehr beeinflußt wird, da durch die Teilung der Karkassenlagen 2 innerhalb der Karkasse beim Herstellungsprozeß keine Zugkräfte mehr wirksam werden, die etwa einen Auszug aus der Verbindung mit dem Kern oder ein Rückziehen der umgeschlagenen Lagen zur Folge haben könnten. Einhaltbare Toleranzen sind hier also hochgenau.

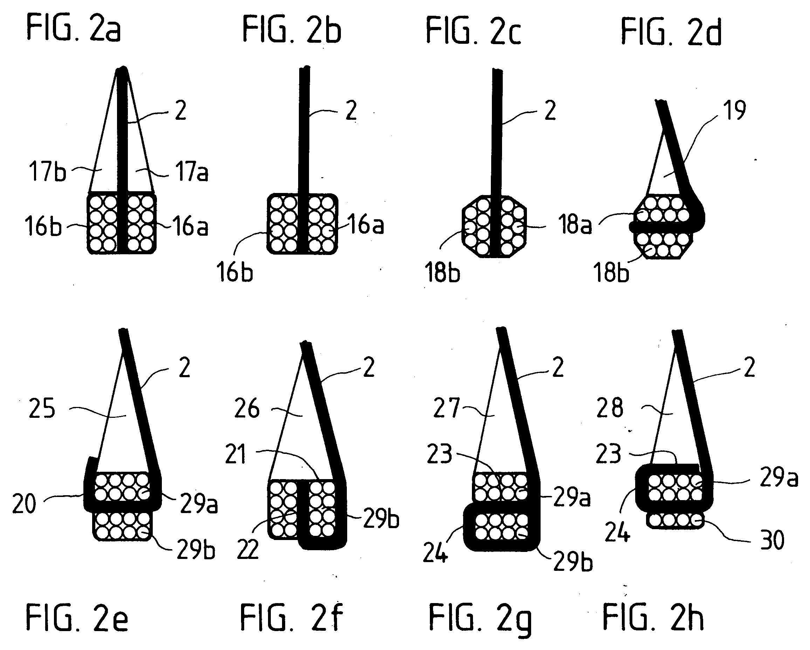

Die Figur 2 zeigt verschiedene Verbindungsmöglichkeiten der geteilten Karkassenlagen mit den zugehörigen Kernen als Teilfiguren a - h. Die Figur 2 zeigt dabei im wesentlichen Varianten der Klemmung der Karkassenlagen in sogenannten 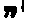 Piercekernen", bei denen die Einzelkabel ringförmig neben- und übereinander in verschiedenen Querschnittsformen gewickelt werden.

Die Fertigung des Reifens erfolgt dann so, daß bei dem Klemmverfahren zwei Kernteile gesetzt werden, zwischen die auf der Aufbautrommel die Karkassenlage eingelegt wird. Die Figur 2a zeigt hierzu eine Karkassenlage 2, die zwischen den beiden Kernteilen 16a und 16b eingelegt und zusätzlich auf ihren beiden Seiten noch mit Kernreitern 17a und 17b versehen wird.

Die Figur 2b stellt eine Ausführungsform dar, bei der die Karkassenlagen 2 ohne Kernreiter lediglich zwischen den beiden Kernteilen 16a und 16b eingelegt bzw. eingeklemmt wird.

Ähnliche Ausführungsbeispiele zeigen die Figuren 2c und 2d, bei der die Karkassenlagen 2 zwischen zwei einen 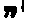 Hexakern" bildenden Kernteilen 18a und 18b eingeklemmt wird. In der Figur 2d ist hierbei zusätzlich ein Kernreiter 19 gesetzt.

Die Figuren 2e - 2h zeigen Ausführungsbeispiele, bei denen die Karkassenlagen 2 zusätzlich mit einem oder mehreren Lagenumschlägen 20 - 24 sowie mit Kernreitern 25 - 28 versehen sind. Die in den Figuren 2e - g gezeigten 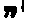 2x4" Piercekerne 29a und 29b können natürlich auch in beliebiger anderer Form etwa als 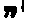 2x2" oder 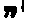 3x1" Kerne ausgebildet sein, oder etwa als 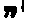 1x4" Kerne 30, wie in der Figur 2h gezeigt.

### Bezugszeichenliste

- 1: Fahrzeugluftreifen
- 2: Karkassenlagen
- 3: Stoßstelle
- 4a, 4b: Gürtellage
- 5: Gürtellagenbereich
- 6: Materialstreifen
- 7: Innenseele
- 8: Laufstreifen
- 9: Endabschnitte des Laufstreifen
- 10a, 10b: Seitenwandstreifen
- 11a, 11b: Kernteile
- 12: Lagenumschlag
- 13: Lagenumschlagslänge
- 14: Kernreiter
- 15: Hornprofil
- 16a, 16b: Kernteil
- 17a, 17b: Kernreiter
- 18a, 18b: Kernteil (Hexakern)
- 19: Kernreiter
- 20-24: Lagenumschlag
- 25-28: Kernreiter
- 29a, 29b: Kernteil (Piercekern)
- 30: Kernteil (Piercekern)

## Patentansprüche

1. Fahrzeugluftreifen, der im wesentlichen aus einem Laufstreifen, Seitenwänden, zwei oder mehreren Gürtellagen als Verstärkungselementen, aus mit Wulstkernen versehenen Reifenwülsten sowie aus einer Karkasse mit gewebeverstärkten Karkassenlagen besteht, wobei die Karkassenlagen in bezug auf den Reifenquerschnitt jeweils zweiteilig und so ausgebildet sind, daß der jeweils eine Teil einer Karkassenlage sich im wesentlichen über eine Reifenhälfte von dem mit Wulstkemen versehenen Reifenwulst über die Seitenwand bis in bzw. unter den Bereich der Gürtellagen erstreckt und an dem zugehörigen Wulstkern über eine kraftschlüssige Verbindung befestigt ist.

2. Fahrzeugluftreifen nach Anspruch 1, dadurch gekennzeichnet, daß die korrespondierenden Karkassenlagen beider Reifenhälften im Bereich der Gürtellagen voneinander beabstandet angeordnet sind.

3. Fahrzeugluftreifen nach Anspruch 2, dadurch gekennzeichnet, daß der durch den Abstand zweier korrespondierender Karkassenlagen entstehende Zwischenraum durch einen Materialstreifen entsprechender Breite ausgefüllt ist.

4. Fahrzeugluftreifen nach Anspruch 3, dadurch gekennzeichnet, daß der Materialstreifen als ein zumindestens mit einem mittleren Teil der Innenseele des Reifens verbundenes Reifenbauteil ausgebildet ist.

5. Fahrseugluftreifen nach Anspruch 1 bis 4, dadurch gekennzeichnet, daß die kraftschlüssige Verbindung mit den Wulstkernen durch eine Klemmung zwischen Karkassenlagen und Kemdrähten erfolgt.

6. Fahrzeugluftreifen nach Anspruch 5, dadurch gekennzeichnet, daß die Klemmung ohne Lagenumschlag erfolgt.

7. Fahrzeugluftreifen nach Anspruch 5, dadurch gekennzeichnet, daß der Lagenumschlag bis auf eine Umschlagshöhe von maximal 20 mm, vorzugsweise bis auf eine Umschlagshöhe von ≤ 12 mm vom unteren Kernrand erfolgt.

8. Fahrzeugluftreifen flach Anspruch 5, dadurch gekennzeichnet, daß der Lagenumschlag bis auf eine Umschlagshöhe erfolgt, deren Bereich nach unten durch einen Mindestabstand von 44 mm vom unteren Kernrand und nach oben durch den Gürtelkantenbereich begrenzt wird.

9. Fahrzeugluftreifen nach Anspruch 5, 7 oder 8, dadurch gekennzeichnet, daß der Lagenumschlag bis zur Anlage an die oberhalb des Kerns befindlichen Karkassenlagen zurückgeführt ist.

10. Fahrzeugluftreifen nach Anspruch 1 bis 8, der aus vorgefertigten und ausvulkanisierten ersten Reifenbauteilen und aus auf die miteinander verbundenen ersten Reifenbauteile aufgebrachten komplettierenden Reifenbauteilen besteht, die durch Vulkanisation mit den ersten Reifenbauteilen verbunden werden, wobei die ersten Reifenbauteile jeweils aus in bezug auf den Reifenquerschnitt im wesentlichen je eine Reifenhälfte bildenden gewebeverstärkten Karkassenlagen bestehen und als sonstige Bauteile zumindest die Wulstverstärkungen und -kerne, die Kernreiter, die Hornprofile und gegebenenfalls einzelne oder alle Teile der Innenseele oder der Seitenwand enthalten, und wobei die komplettierenden Reifenbauteile aus dem Gürtelverband, gegebenenfalls der zumindest einlagigen ein- oder mehrteiligen Gürtelbandage, dem Laufstreifen, und den evtl. fehlenden Teilen der Innenseele oder der Seitenwand bestehen.
